(19) Europäisches Patentamt
European Patent Office
Office européen des brevets

(11) Veröffentlichungsnummer: 0 139 609
B1

(12) # EUROPÄISCHE PATENTSCHRIFT

(45) Veröffentlichungstag der Patentschrift: 04.02.87

(51) Int. Cl.⁴: C 08 K 5/42, C 09 D 3/48

(21) Anmeldenummer: 84810394.1

(22) Anmeldetag: 13.08.84

(54) **Verfahren zum Härten säurehärtbarer Lacke.**

(30) Priorität: 17.08.83 CH 4484/83

(43) Veröffentlichungstag der Anmeldung: 02.05.85 Patentblatt 85/18

(45) Bekanntmachung des Hinweises auf die Patenterteilung: 04.02.87 Patentblatt 87/6

(84) Benannte Vertragsstaaten: DE FR GB NL

(56) Entgegenhaltungen: EP-A-0 044 115

(73) Patentinhaber: CIBA- GEIGY AG, Klybeckstrasse 141, CH- 4002 Basel (CH)

(72) Erfinder: Berner, Godwin, Dr., Waldhofstrasse 70, CH- 4310 Rheinfelden (CH)
Erfinder: Rutsch, Werner, Dr., Avenue Weck-Reynold 1, CH- 1700 Fribourg (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 139 609 B1

LIBER, STOCKHOLM 1987

**Beschreibung**

Die Erfindung betrifft ein Verfahren zum Härten von säurehärtbaren Einbrennlacken in Gegenwart eines blockierten Säurekatalysators durch Bestrahlung mit kurzwelligem Licht und anschliessendem Erwärmen.

Säurehärtbare Einbrennlacke werden für solche Verwendungszpecke eingesetzt, bei denen eine hohe Einbrenntemperatur vermieden werden soll. Diese Lacke enthalten als Bindemittel ein säurehärtbares Harz, wie z.B. Melaminharz, Harnstoffharz, Phenolharz, Epoxidharz sowie deren Gemische mit härtbaren Polyester-, Acryl- und Alkydharzen. Als saure Härtungskatalysatoren verwendet man vorwiegend organische Säuren wie z.B. Sulfonsäuren oder Carbonsäuren. Da diese Säuren bereits bei Raumtemperatur eine langsame Härtung bewirken, werden sie dem Lack erst kurz vor dessen Applikation zugesetzt, was mit dem Problem der Einhaltung bestimmter Topfzeiten verbunden ist. Um dieses Problem zu vermeiden hat man die Verwendung blockierter Säurekatalysatoren vorgeschlagen, aus denen beim Erhitzen die freie Säure entsteht, die der eigentliche Härtungskatalysator ist. Beispiele hierfür sind thermisch spaltbare Salze oder Ester von Sulfonsäuren.

So werden in der EP-Al-44115 als blockierte Härtungskatalysatoren Mono- oder Disulfonate von Oximen beschrieben wie z.B. das Benzilmonoxim-tosylat.

Diese Sulfonate werden dem Lack zugegeben und eine solche Zusammensetzung ist über mehrere Wochen lagerfähig. Beim Erhitzen des Lackes auf 130°C tritt eine Spaltung des Oxim-sulfonates ein und die entstehende Sulfonsäure katalysiert die Härtung des Lackes. Die Spaltungstemperatur des Sulfonates bestimmt hierbei die Höhe der inbrenntemperatur, d.h. unterhalb der Spaltungstemperatur findet ur eine langsame Härtung des Lackes statt.

Es wurde nun gefunden, dass man solche Oxim-sulfonate nicht nur thermisch sondern auch durch UV-Bestrahlung spalten kann. Dies ermöglicht eine Herabsetzung der Einbrenntemperatur, da diese nicht mehr durch die Höhe der Spaltungstemperatur des Katalysators bestimmt wird. Es wird dadurch möglich, säurehärtbare Lacke bei Temperaturen von etwa 100°C im den in der Technik üblichen Zeite auszuhärten.

Die Erfindung betrifft daher ein Verfahren zum Härten von Einbrennlacken, die ein säurehärtbares Harz und als Härtungskatalysator eine blockierte Sulfonsäure der Formel 1 enthalten

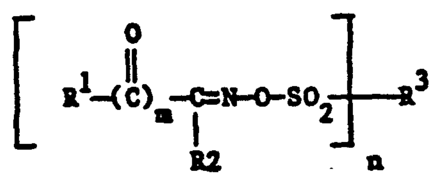

(I),

worin m = 0 oder 1 und n = 1 oder 2 ist,

$R^1$ $C_1$-$C_{12}$-Alkyl, $C_1$-$C_4$-Halogenalkyl, $C_2$-$C_6$-Alkenyl, $C_5$-$C_{12}$-Cyclo-alkyl, unsubstituiertes oder durch einen oder mehrere der Substituenten Halogen, $C_1$-$C_{16}$-Alkyl, $C_1$-$C_4$-Alkoxy, Phenoxy, phenyl oder Nitro substituiertes $C_6$-$C_{10}$-Aryl, Furyl, Thienyl, $C_7$-$C_{12}$-Aralkyl, $C_1$-$C_8$-Alkoxy, $C_5$-$C_8$-Cycloalkoxy, Phenoxy oder $H_2N$-CO-NH- bedeutet,

$R^2$ eine der für R gegebenen Bedeutungen hat oder -CH, $C_2$-$C_5$-Alkanoyl, Benzoyl, $C_2$-$C_5$-Alkoxycarbonyl, Phenoxycarbonyl, -N($R^4$)($R^5$), Morpholino oder Piperidino bedeutet oder $R^1$ und $R^2$ zusammen mit den Atomen, am die sie gebunden sind, einen 5-8-gliedrigen Ring bilden, der durch 1 oder 2 Benzoreste anneliert sein kann, wobei $R^4$ Wasserstoff, $C_1$-$C_{12}$- Alkyl, Phenyl, $C_2$-$C_9$-Alkanoyl oder Benzoyl und $R^5$ Wasserstoff, $C_1$-$C_{12}$-Alkyl oder Cyclohexyl bedeuten,

$R^3$, wenn n = 1 ist, $C_1$-$C_{18}$-Alkyl, unsubstituiertes oder durch einen oder mehrere der Substituenten Halogen, $C_1$-$C_4$-Halogenalkyl, $C_1$-$C_{16}$-Alkyl, $C_1$-$C_4$-Alkoxy, $C_1$-$C_4$-Alkyl-CONH-, Phenyl-CONH-, Benzoyl oder Nitro substituiertes $C_6$-$C_{10}$-Aryl, $C_5$-$C_{12}$-Cycloalkyl, $C_7$-$C_9$-Aralkyl, Campheryl, -$CF_3$, -$CCl_3$ oder -$NH_2$ bedeutet, und wenn n = 2 ist, $C_2$-$C_{12}$- Alkylen, unsubstituiertes oder durch $C_1$-$C_{12}$-Alkyl substituiertes Phenylen, Naphthylen, Diphenylen oder Oxydiphenylen bedeutet,

dadurch gekennzeichnet, dass man den Lack mit kurzpelligem Licht bestrahlt, wodurch die freie Sulfonsäure gebildet wird, und man anschliessend den Lack bei erhöhter Temperatur aushärtet.

$R^1$, $R^2$, $R^4$ und $R^5$ als $C_1$-$C_{12}$-Alkyl können unverzweigtes oder verzweigtes Alkyl sein, beispielsweise Methyl, Ethyl, Propyl, Isopropyl, n-Butyl, s-Butyl, t-Butyl, n-Pentyl, Isoamyl, n-Hexyl, 2-Ethylbutyl, n-Octyl, 2-Ethylhexyl, n-Decyl, n-Dodecyl. $R^3$ als -$C_1$-$C_{18}$-Alkyl kann darüberhinaus auch z.B. n-Tetradecyl, n-Pentadecyl, n-Hexadecyl oder n-Octadecyl, sein.

$R^1$ oder $R^2$ als $C_1$-$C_4$-Halogenalkyl kann z.B. Chlormethyl, Trichlormethyl, Trifluormethyl oder 2-Brompropyl sein.

$R^1$, $R^2$ als $C_2$-$C_6$-Alkenyl können z.B. Vinyl, Allyl, 1-Propenyl, Isopropenyl Methallyl oder 2-Butenyl sein $R^1$ $R^2$

und $R^3$ als $C_5$-$C_{12}$-Cycloalkyl können z.B. Cyclopentyl, Cyclohexyl, Cyclooctyl oder Cyclododecyl sein.

$R^1$ und $R^2$ als unsubstituiertes oder substituiertes Aryl können z.B. Phenyl, 4-Fluorphenyl, 4-Chlorphenyl, 2,4-Dichlorphenyl, 2,6-Dichlorphenyl, p-Tolyl, 2,4-Dimethylphenyl, 4-Isopropylphenyl, 4-t-Butylphenyl, 4-Dodecylphenyl, 4-Methoxyphenyl, 4-Butoxyphenyl, 4-Phenoxyphenyl, 4-Biphenylyl, 3-Nitrophenyl, 1- oder 2-Naphthyl, 5-Chlor-l-naphthyl, 6-Brom-2-naphthyl 4-Nitro-1-naphthyl oder 6-Methoxy-2-naphthyl sein. $R^1$ als Furyl oder Thienyl ist vorzugspeise 2-Furyl oder 2-Thienyl.

$R^3$ als unsubstituiertes oder substituiertes Aryl kann z.B. Phenyl, 4-Chlorphenyl, 2,4-Dichlorphenyl, 2,6-Dichlorphenyl, 4-(Trifluor-methyl)-2-nitrophenyl, p-Tolyl, 2,4-Dimethylphenyl, 4-Isopropyl-phenyl, 4-Octylphenyl, 4-Nonylphenyl, 4-Dodecylphenyl, 4-Tetra-decylphenyl, 3- oder 4-Methoxyphenyl, 4-Acetamidophenyl, 4-Benz-amidophenyl, 4-Benzoylphenyl, 3-Nitrophenyl, Naphthyl, Diisobutylnsphthyl, Nonylnaphthyl, Dinonylnaphthyl oder Dodecylnaphthyl sein.

$R^3$ als $C_7$-$C_9$-Aralkyl kann z.B. Benzyl, 1- oder 2-Phenylethyl oder 3-Phenylpropyl sein. $R^1$ und $R^2$ als $C_7$-$C_{12}$-Aralkyl können darüber hinsus auch z.B. 2-Phenylisopropyl, 2-Phenylhexyl oder 2-Naphthyl-methyl sein.

$R^4$ als $C_2$-$C_8$-Alkanoyl kann z.B. Acetyl, Propionyl, Butyryl, Hexanoyl oder Octanoyl sein.

$R^1$ als Alkoxy ist vorzugsweise Methoxy oder Ethoxy. $R^1$ als Cycloalkoxy ist vorzugswwßse Cyclohexyloxy.

Wenn $R^1$ und $R^2$ zusammen mit den Atomen, an die sie geünden sind, einen 5-7-gliedrigen Ring bilden, so kann das ein isocyclischer oder heterocyclischer Ring sein, wie z.B. ein Cyclopentan-, Cyclohexan-, Cycloheptan-, Pyran- oder Piperidinring. Dieser Ring kann durch Benzoreste anneliert sein, Beispiele hierfür sind ein Tetrahydronaphthalin-, Dihydroanthracen-, Indan-, Chroman-, Fluoren-, Xanthenoder Thioxanthenringsystem. Der Ring kann auch Carbonylgruppen enthalten. Beispiele hierfür sind Benzochinon-, Naphthochinon- oder Anthrachinon-reste.

Wenn n = 2 ist, kann $R^3$ z.B. Tetramethylen, Hexamethylen, Octamethylen, 1,3-Phenylen, 1,5-Naphthylen, 2,6-Naphthylen, 4,4'-Dipheny-len oder 4,4'-Oxydiphenylen sein.

Bevorzugt verwendet man als blockierten Härtungskatalysator eine Verbindung der Formel I, worin m = 0 oder 1 ist, n = 1 ist, $R^1$ $C_{12}$-Alkyl, $C_1$-$C_4$-Halogenalkyl, $C_5$-$C_{12}$-Cycloalkyl, unsubstituiertes oder durch 1 oder 2 der Substituenten Cl, $C_1$-$C_{16}$-Alkyl, $C_1$-$C_4$-Alkoxy, Phenoxy oder Nitro substituiertes $C_6$-$C_{10}$-Aryl, 2-Furyl, 2-Thienyl, $C_1$-$C_4$-Alkoxy, Cyclohexyloxy oder Phenoxy bedeutet,

$R^2$ eine berür $R^1$ angegebenen Bedeutungen hat oder -CN, $C_2$-$C_5$-Alkanoylk Benzoyl, $C_2$-C2-Alkoxycarbonyl, -N($R^4$)($R^5$) oder Morpholino, bedeutet, oder $R^1$ und $R^2$ zusammen mit den Atomen, an die sie gebunden sind, einen 5-8-gliedrigen Ring bilden, der durch 1 oder 2 Benzoreste anneliert sein kann, wobei $R^5$ Wasserstoff, $C_1$-$C_4$-Alkyl, Phenyl, $C_2$-$C_5$-Alkanoyl, Bensoyl und $R^5$ Wasserstoff oder $C_1$-$C_4$-Alkyl bedeuten, und

$R^3$ $C_1$-$C_{18}$-Alkyl, unsubstituiertes oder durch ein oder mehrere der Substituenten Halogen, $C_1$-$C_4$-Halogenalkyl, $C_1$-$C_{16}$-Alkyl, $C_1$-$C_4$-Alkoxy oder Nitro substituiertes $C_6$-$C_{10}$-Aryl, $C_5$-$C_{12}$-Cycloalkyl, Campheryl, $-CF_3$ oder $-CCl_3$ bedeutet.

Besonders bevorzugt verwendet man einen Härtungskatlaysator der Formel I, vorin m = 0 oder 1 ist, n = 1 ist, $R^1$ $C_1$-$C_4$-Alkyl, Trifluormethyl, unsubstituiertes oder durch 1 oder 2 der Substituenten Cl, $C_1$-$C_4$-Alkyl, $C_1$-$C_4$-Alkoxy oder Nitro substituiertes Phenyl, 2-Furyl, 2-Thienyl oder $C_1$-$C_4$-Alkoxy bedeutet,

$R^2$ eine der für $R^1$ gegebenen Bedeutungen hat oder -CN, Dialkylamino oder Morpholino ist, oder R und R zusammen mit den Atomen, an die sie gebunden sind, einen 5- oder 6-gliedrigen Ring bilden, der durch 1 oder 2 Benzoreste anneliert sein kann, und

$R^3$ $C_1$-$C_4$-Alkyl, unsubstituiertes oder durch einen oder zwei der Substituenten Cl, $CF_3$, $C_1$-$C_{16}$-Alkyl oder $NO_2$ substituiertes Phenyl bedeutet, insbesondere solche, worin m = 0 oder 1 ist, n = 1 ist,

$R^1$ $C_1$-$C_4$-Alkyl, Trifluormethyl, Phenyl, Mono- oder Dichlorphenyl oder Nitrophenyl ist, $R^2$ eine der für $R^1$ angegebenen Bedeutungen hat oder -CN bedeutet, oder $R^1$ und $R^2$ zusammen mit den Atomen, an die sie gebunden sind, einen 5-6-gliedrigen Ring bilden, der durch eine oder zwei Benzogruppen anneliert ist, und $R^3$ Methyl, Phenyl oder durch $C_1$-$C_{16}$-Alkyl substituiertes Phenyl bedeutet.

Viele dieser Oxim-sulfonate bilden syn- und anti-Stereoisomere. Für die erfindungsgemässe Verwendung können beide Isomere oder deren Gemisch brauchbar sein. Soweit es sich um α-Keto-oximsulfoante (Monoximsulfoante von 1,2-Diketonen) handelt, deren anti-Form geringe Stabilität zeigen, ist die erfindungsgemässe Verwendung der syn-Isomeren bevorzugt.

Beispiele für solche als blockierte Erärtungskatalysatoren verwendbare Oxim-sulfonate der Formel 1 sind die folgenden Verbindungen:

1) Benzilmonoxim-tosylat

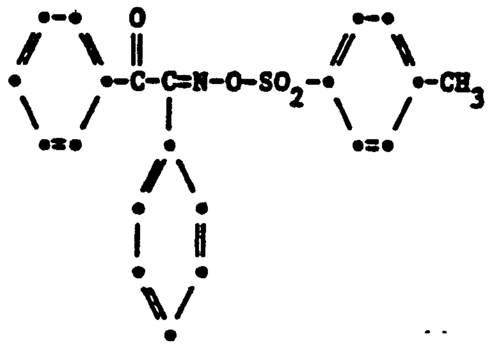

2) Benzilmonoxim-p-dodecylbenzolsulfonat
3) Benzilmonoxim-hexadecansulfonat
4) -4-Nitroacetophenonoxim-tosylat
5) α-Tosyloxyimino-capronsäure-ethylester

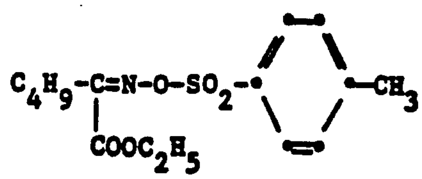

6) α-Cyclohexylsulfonyloxyimino-phenylesigsäure-ethylster

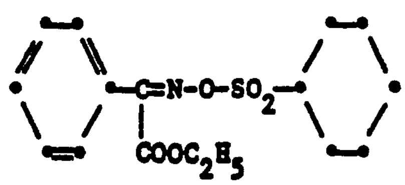

7) α-(4-Chlorphenylsulfonoxyimino)-capronsäure-phenylester

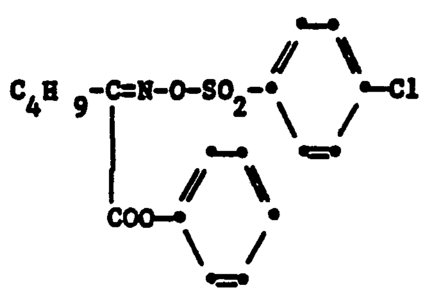

8) 4,4'-Dichlorbenzilmonoxim-methansulfonat
9) 4,4'-Dimethylbenzilmonoxim-tosylat
10) 4,4'-Dimethoxybenzilmonoxim-p-dodecylbenzolsulfonat
11) Dibenzylketonoxim-tosylat
12) α-Tosyloxyimino-cyanessigsäure-ethylester
13) Furilmonoxim-4-acetamidobenzolsulfonat
14) Acetonoxim-p-benzoylbenzolsulfonat
15) 1-Amino-1-(-campher-10-sulfonyloxyimino)-2-phenylethan

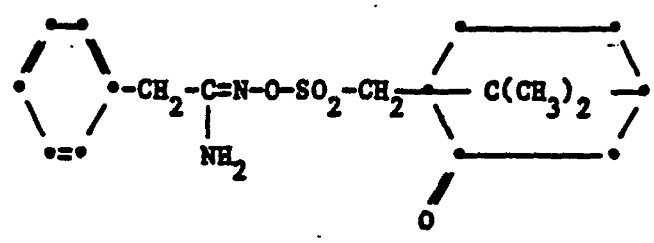

16) α-(Nitrophenylsulfonyloxyimino)-cyclohexyl-essigsäurecyclohexylester
17) α-(2-Naphthylsulfonyloxyimino)-benzoylessigsäure-ethylester

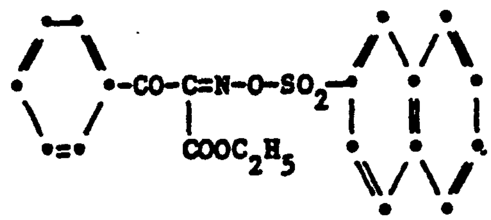

18) 3-Benzylsulfonyloxyimino-acetylaceton

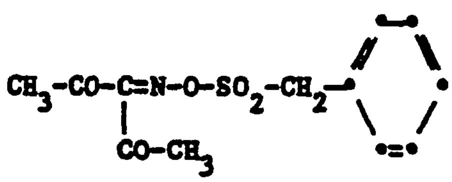

19) I-Morpholino-I-(trichlormethylsulfonyloxyimino)-2-phenylethan
20) Bis-(benzilnonoxim)-butan-14-disulfonat

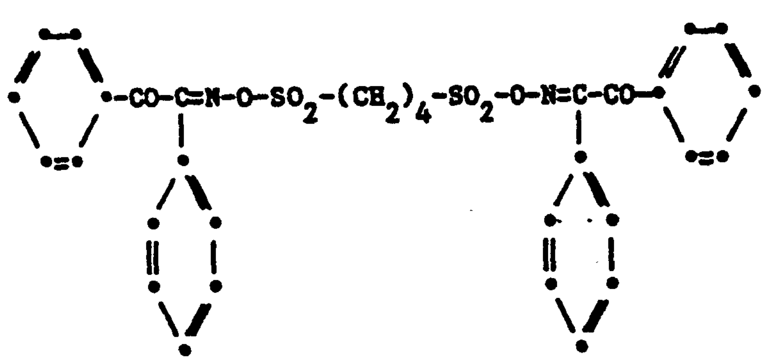

21) Bis(benzilnonoxim)-dioctylnaphthalindisulfonat

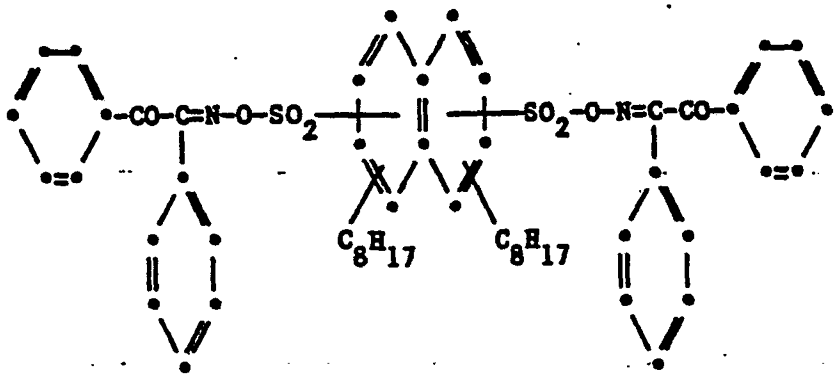

22) Bis(α-hydroxyiminocapronsäureethylester)-diphenylen-4,4'-di-sulfonat

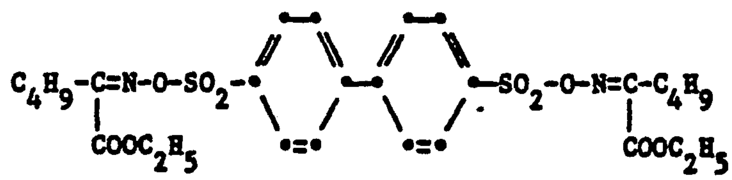

23) Bis(α-hydroxyiminocapronsäureethylester)-diphenyloxyd-4,4'-disulfonat

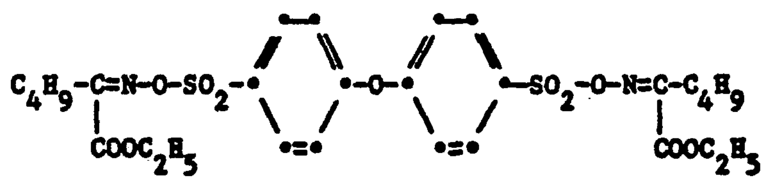

24) α-Tetralonoxim-tosylat
25) I-Indanonoxim-tosylat
26) Anthrachinonmonoxim-tosylat
27) Xanthonoxim-tosylat
28) Thioxanthonoxim-tosylat
29) α-(p-Toluolsulfonyloxy-imino)-benzylcyanid

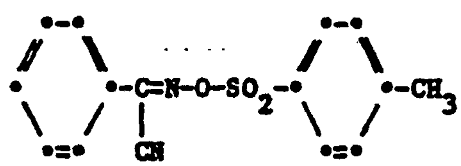

30) α-(p-Chlorbenzolsulfonyloxyimino)-benzylcyanid
31) α-(4-Nitrobenzolsulfonyloxyimino)-benzylcyanid
32) α-(4-Nitro-2-trifluormethylbenzolsulfonyloxyimino)-benzylcyanid
33) α-(Benzolsulfonyloxyimino)-4-chlorbenzylcyanid
34) α-(Benzolsulfonyloxyimino)-2,4-dichlorbenzylcyanid
35) α-(Benzolsulfonyloxyimino)-2,6-dichlorbenzylcyanid
36) α-(Benzolsulfonyloxyimino)-4-methoxybenzylcyanid

37) α-(2-Chlorbenzolsulfonyloxyimino)-4-methoxybenzylcyanid
38) α-(Benzolsulfonyloxyimino)-thien-2-ylacetonitril
39) 4-Chlor-α-trifluor-acetophenonoxim-benzolsulfonat

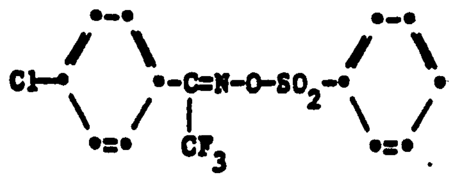

40) α-(Benzolsulfonyloxyimino)-cyanessigsäuremethylester
41) Fluorenonoxim-tosylat
42) 2,6-Di-tert.butyl-benzochinonmonoxim-tosylat

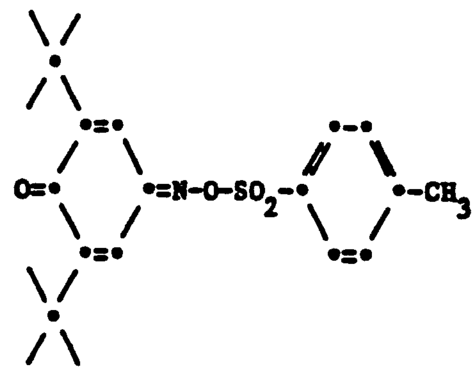

43) α-(Benzolsulfonyloxyimino)-ureidocarbonylacetonitril

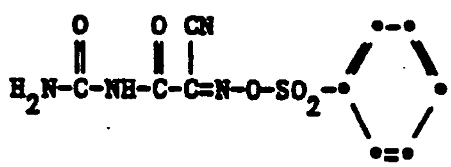

44) α-(p-Toluolsulfonyloxyimino)-benzoylacetonitril
45) α-(p-Toluolsulfonyloxyimino)-4-methoxybenzoylacetonitril
46) Indan-1,3-dion-monoxim-tosylat
47) 2,3-Dihydro-1,4-naphthochinon-monoxim-tosylat

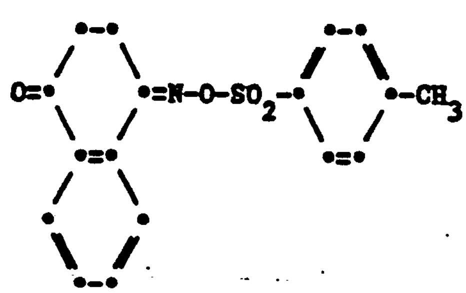

48) Acetophenonoxim-tosylat
49) Chromanonoxim-tosylat

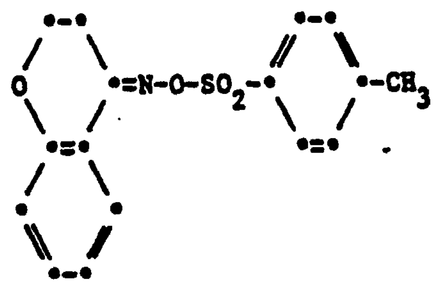

Die Verbindungen der Formel 1 sind zum Teil bekannte Verbindungen, wie sie z.B. in der EP-AI-44115 beschrieben sind. Ihre Herstellung kann durch Umsetzung der entsprechenden Oxime mit dem entsprechenden Sulfonsäurechlorid bzw. Disulfonsäurechlorid erfolgen. Die als Ausgangsmaterial hierfür benötigten Oxime sind entweder bekannte Verbindungen oder können nach den zur Herstellung von Oximen üblichen Verfahren, beispielsweise durch Umsetzung der entsprechenden Carbonyl- oder Thiocarbonylverbindungen mit Hydroxylsmin oder durch Nitrosierung reaktiver $CH_2$-Gruppen oder durch Nitrosierung von Hydroxyaromaten, gewonnen werden.

Die Härtungskatalysatoren der Formel 1 werden den Lacken in einer für die Härtung ausreichenden Menge zugesetzt. Die benötigte Menge hängt von der Art des Harzes sowie von der beabsichtigten Härtungstemperatur und Härtungszeit ab. Im allgemeinen verwendet man 0,1 bis 10 Gew.%, vorzugsweise 0,5 bis 5 Gew.%, bezogen auf das lösungsmittelfreie Harz. Mischungen von Härtungskatalysatoren der Formel 1 können auch eingesetzt werden.

Als säurehärtbare Harze kommen alle Harze in Frage, deren Härtung durch saure Katalysatoren beschleunigt werden kann. Das sind vor allem Melamin-, Harnstoff-, Epoxid-, Phenol-, Acryl-, Polyester- und Alkydharze, insbesondere aber die Mischungen von Acryl-, Polyesteroder Alkydharzen mit einem Melaminharz. Darunter fallen auch modifizierte Lackharze wie z.B. acrylmodifizierte Polyester- und Alkydharze. Beispiele für einzelne Typen von Harzen, die unter den Begriff Acryl-, Polyester- und Alkydharze fallen, sind z.B. in Wagner, sarx/Lackkunstharze (München, 1971), Seiten 86 bis 123 und 229 bis 238, oder in Ullmann/Encyclopädie der techn. Chemie, 4. Auflage, Band 15 (1978), Seiten 613 bis 628, beschrieben. Bevorzugt enthält der Lack ein Aminoharz. Beispiele hierfür sind unverätherte oder verätherte Melamin-, Harnstoff-, Guanidin- oder Biuret-Harze. Von besonderer Bedeutung ist die saure Katalyse für die Härtung von Lacken, die verätherte Aminoharze enthalten, wie z.B. methylierte oder butylierte Melaminharze (N-Methoxymethyl- bzw. N-Butoxymethylmelamin) oder methylierte/butylierte Glycolurile wie z.B. dasjenige der Formel

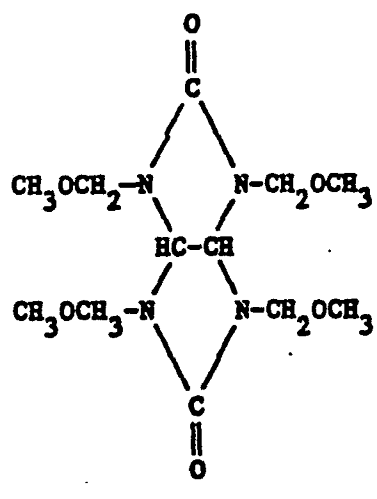

Beispiele für weitere Harzzusammensetzungen sind Gemische von polyfunktionellen Alkoholen oder Hydroxylgruppen enthaltenden Acrylund Polyesterharzen, oder partiell verseiftem Polyvinylacetat oder polyvinylalkohol mit polyfunktionellen Dihydropyranylderivaten, wie beispielsweise Derivate der 3,4-Dihydro-2H-pyran-2-carbonsäure.

Für bestimmte Zwecke verwendet man auch Harzgemische, die monomere oder oligomere Bestandteile mit polymerisationsfähigen ungesättigten Gruppen haben. Auch solche Lacke sind nach dem erfindungsgemässen Verfahren härtbar. Hierbei können zusätzlich a) radikalische Polymerisationsinitiatoren oder b) Photoinitiatoren, beispielsweise solche aus der Klasse der aromatischen Ketone, Benzoinverbindungen, Benzylketale oder α-Hydroxyacetophenonderivate mitverwendet werden. Erstere initiieren die Polymerisation der ungesättigten

Gruppen während der Wärmebehandlung, letztere während der UV-Bestrahlung.

Die Lacke können Lösungen oder Dispersionen des Lackharzes in einem organischen Lösungsmittel oder in Wasser sein, sie können aber auch lösungsmittelfrei sein. Von besonderem Interesse sind Lacke mit geringem Lösungsmittelanteil, sogenannte "high solids-Lacke". Die Lacke können Klarlacke sein, wie sie z.B. in der Automobilindustrie als Decklacke von Mehrschichten-Anstrichen verwendet werden. Sie können auch Pigmente enthalten, seien es anorganische oder organische Pigmente, sowie Metallpulver für Metalleffekt-Lacke.

Die Lacke können weiterhin kleinere Mengen an speziellen Zusätzen enthalten, wie sie in der Lacktechnologie üblich sind, beispielsweise Verlaufshilfsmittel, Thixotropiemittel, Lichtschutzmittel, Antioxydantien oder Photoinitiatoren.

Beispiele für Lichtschutzmittel sind solche aus der Klasse der Hydroxyphenyl-benzotriazole, Hydroxybenzophenone, Cyanacrylate, Hydroxyphenyltriazine, Oxalanilide, organischen Nickelverbindungen oder der Polyalkylpiperidinderivate. Da Lichtschutzmittel vom UV-Absorber-Typ die erfindungsgemässe UV-Bestrahlung stören können, kann man solche Lichtschutzmittel auch einer angrenzenden Lackschicht zusetzen, aus der sie dann allmählich in die zu schützende Schicht des Einbrennlackes eindiffundieren. Die angrenzende Lackschicht kann eine Grundierung unter dem Einbrennlack oder ein Decklack über dem Einbrennlack sein.

Die Applikation des Lackes kann nach einer der in der Technik üblichen Methoden, beispielsweise durch Besprühen, Streichen oder Tauchen geschehen. Bei Verwendung geeigneter Lacke kann auch ein elektrischer Auftrag, beispielsweise durch Elektrotauchlackierung, erfolgen, Nach dem Trocknen wird der Lackfilm mit kurzwelligem Licht bestrahlt. Hierzu verwendet man vorzugsweise UV-Licht.

Hierfür gibt es heute eine Anzahl geeigneter technischer Geräte. Diese enthalten Quecksilber-mitteldruck-, -hochdruck- oder -niederdrucklampen sowie Leuchtstoffröhren, deren Emissionsmaxima bei 250 bis 400 nm liegen. Die nötigen Bestrahlungszeiten hängen von der Schichtdicke des Harzes, von der Pigmentierung, von der Lichtstärke der Lampen und von der Distanz der Lampen ab. Ein unpigmentierter Lack in üblicher Schichtdicke benötigt in üblichen UV-Bestrahlungsgeräten einige Sekunden Belichtungszeit. In dieser Zeit hat sich der latente Katalysator unter Bildung von freier Sulfonsäure photochemisch umgewandelt.

Setzt man dem Harz zusätzlich Photosensibilisatoren zu, so kann man die Bestrahlungszeit verkürzen und/oder andere Lichtquellen verwenden. Beispiele für bekannte photosensibilisatoren sind aromatische Ketone oder aromatische Aldehyde (wie sie z.B. im US-A- 4,017,652 beschrieben sind), Cumarine (wie sie z.B. im US-A- 4,366,228 beschrieben sind), Thioxanthone, kondensierte Aromaten wie z.B. Perylen, aromatische Amine (wie sie z.B. im US-A- 4,069,954 beschrieben sind) oder kationische und basische Farbstoffe (wie sie z.B. im US-A- 4,026,705 beschrieben sind).

Anschliessend erfolgt die Härtung des Lackfilmes durch Wärmebehandlung. Diese kann im Unterschied zu Verfahren ohne Bestrahlung bei relativ niedrigen Temperaturen durchgeführt werden. Bei einer Einbrenndauer von etwa 30 Minuten und Verwendung von etwa 2% Katalysator genügen Einbrenntemperaturen von etwa 70 bis 80°C. Bei Verwendung von 1% Katalysator benötigt man Temperaturen von etwa 80 bis 100°C und bei Verwendung von 0,5% Katalysator etwa 100 bis 120°C. Demgegenüber benötigt man ohne Bestrahlung bei derselben Einbrennzeit Temperaturen, die um 20-50°C höher sind. Bevorzugt härtet man die erfindungsgemäss katalysierten Lacke Bestrahlung bei Temperaturen unterhalb 120°C, insbesondere bei 80-100°C aus.

Diese relativ niedrigen Einbrenntemperaturen des erfindungsgemässen Verfahrens sind von erheblieher technischer Bedeutung bei der Beschichtung oder Lackierung von temperaturempfindlichen Substraten. Beispiele hierfür sind Gegenstände aus Holz oder Karton, insbesondere aber Gegenstände, die Teile aus Kunststoffen oder Kautschuken enthalten, beispielsweise elektrische Geräte, Fahrzeuge aller Art oder Maschinen.

Eine langsame Härtung des Lackes nach der Bestrahlung setzt auch ohne Erwärmen, d.h. bei Raumtemperatur, ein. Eine solche Härtung dauert jedoch mehrere Tage, so dass sie nur in Ausnahmefällen von technischem Interesse sein kann.

Gegenüber dem Zusatz einer freien säure als Härtungskatalysator haben die erfindungsgemäss verwendeten blockierten Sulfonsäuren den Vorteil, dass die damit versetzten Lacke eine wesentlich längere Topfzeit haben.

Das erfindungsgemässe Verfahren ist für alle Arten der industriellen Beschichtung und Lackierung geeignet, wie z.B. für die Lackierung von Maschinen, Fahrzeugen, Schiffen oder Konstruktionsteilen. Von besonderer Bedeutung ist es für die Automobil-Lackierung. Hierbei kann es sowohl in Einschicht-Lackierung wie Mehrschicht-Lackierung angewendet werden. Von besonderem Interesse ist auch die Anwendung des Verfahrens für die kontinuierliche Beschichtung von Blechen, beispielsweise Stahl- oder Aluminiumblechen, nach dem sogenannten Coil-Coat-Verfahren. Das Verfahren eignet sich zudem für die Härtung von säurehärtbaren Druckfarben, die sich wegen ihrer hervorragenden Aufziehfähigkeit besonders für den Blechdruck eignen.

Ein weiteres Einsatzgebiet ist die Härtung von säurehärtbaren Schleifmittel-Zusammensetzungen, wie sie in der DE-A- 33 17 570 näher beschrieben ist.

Die folgenden Beispiele erläutern das Verfahren anhand spezifischer säurehärtbarer Einbrennlacke. Hierin bedeuten Teile Gewichtsteile und % Gewichtsprozente. Die Temperaturen sind in °C angegeben

**Beispiel 1**: Härtung eines Lackes auf Basis eines

Acryl-Melamin-Harzes.

Aluminiumbleche von 0,5 mm Dicke, die mit einem weisspigmentierten Grundlack auf Basis Polyesterhar beschichtet sind, werden mit einem festkörperreichen Klarlack der folgenden Zusammensetzung beschichtet:

| | |
|---|---|
| Hexamethoxymethylmelamin (Cymel® 301 der Firma Amer.Cyanamid, 100%) | 17,93 Teile |
| Butylacetat | 9,73 Teile |
| Celluloseacetobutyrat (CAB® 551001 der Firma Eastman Chem.) | 1,83 Teile |
| Verlaufshilfsmittel auf Silikonbasis (Byketol® Spez.der Fa.ByK-Mallinckrodt) | 2,80 Teile |
| Verlaufshilfsmittel auf Polymer-Basis (Modaflow®, 1%ige Lösung; Monsanto) | 0,29 Teile |
| Hydroxylfunktionelles Acrylharz (Paraloid® AT 410, 73 Gew.%; Rohm und Haas) | 57,30 Teile |
| n-Butanol | 10,12 Teile |
| | 100,00 Teile |

Der Festkörperanteil dieser Rezeptur beträgt etwa 60%.

Der Katalysator wird in einer Menge von 1%, bezogen auf lösungsmittelfreies Bindemittel, in einem Teil des Butanols vorgelöst und in die obige Harzformulierung eingearbeitet.

Der Lack wird mit einem elektrischen Filmziehgerät so aufgetragen, dass die Trockenfilmstärke etwa 30 µm beträgt. Nach einer Abluftzeit von 15 Minuten werden die Proben in einem PPG-Bestrahlungsgerät mit 2 Hochdruckquecksilberdampflampen à 80 Watt einer UV-Bestrahlung unter Variation der Bestrahlungszeit ausgesetzt, Ansehliessend werden die Proben in einem Lackofen 30 Minuten bei 100° C eingebrannt.

Zur Beurteilung des Härtungsgrades wird die Pendelhärte des Lackfilms nach der Methode von König (DIN 53 158) bestimmt, und zwar 30 Minuten und 24 Stunden nach dem Einbrennen.

Die Ergebnisse sind in Tabelle 1 aufgeführt. Die in der Tabelle angegebenen Nummern der Katalysatoren beziehen sich auf die Liste auf Seite 6-11

Tabelle 1

| Katalysator (jeweils 1%) | Bestrahlungszeit (Sek.) | Pendelhärte (Sek.) nach 30 Min | nach 24 h |
|---|---|---|---|
| Nr. 1 | 0 | 58 | 56 |
| | 2,1 | 179 | 190 |
| | 4,2 | 184 | 194 |
| | 8,4 | 184 | 195 |
| | 12,6 | 183 | 194 |
| Nr. 4 | 0 | 19 | 18 |
| | 2,1 | 179 | 188 |
| | 4,2 | 180 | 189 |
| | 8,4 | 178 | 190 |
| | 12,6 | 179 | 190 |
| Nr. 12 | 0 | 20 | 27 |
| | 2,1 | 124 | 146 |
| | 4,2 | 155 | 179 |
| | 8,4 | 174 | 190 |
| | 12,6 | 178 | 189 |
| Nr. 24 | 0 | 10 | 13 |
| | 2,1 | 158 | 165 |
| | 4,2 | 176 | 186 |
| | 8,4 | 186 | 193 |
| | 12,6 | 189 | 197 |
| Nr. 25 | 0 | 13 | 13 |
| | 2,1 | 104 | 106 |
| | 4,2 | 146 | 151 |
| | 8,4 | 169 | 193 |
| | 12,6 | 179 | 193 |
| Nr. 28 | 0 | 10 | 11 |
| | 2,1 | 143 | 155 |
| | 4,2 | 165 | 179 |
| | 8,4 | 174 | 183 |
| | 12,6 | 181 | 193 |

Man ersieht daraus, dass bereits nach kurzer Bestrahlungszeit ein starker Effekt gegenüber den unbestrahlten Proben vorhanden ist, der bei Verlängerung der Bestrahlungszeit nicht mehr wesentlich zunimmt.

**Beispiel 2**: Härtung eines Lackes auf Basis eines

Acryl-Melamin-Harzes

Es wird derselbe Lack verwendet wie in Beispiel 1, der Auftrag auf die Glasplatten erfolgt jedoch in einer Schichtdicke, die nach der Härtung etwa 45 µm beträgt. Härtung und Testung erfolgt wie in Beispiel 1, der Katalysator wird in einer Menge von 1 %, bezogen auf das Bindemittel, verwendet, Tabelle 2 zeigt die Pendelhärte bei Härtung nach variierenden Bestrahlungszeiten. Die Resultate bestätigen die im Beispiel 1 gezeigten Feststellung, dass bereits nach kurzer Bestrahlung der Katalysator aktiviert wird.

Tabelle 2

| Katalysator (jeweils 1%) | Bestrahlungszeit (Sek.) | Pendelhärte (Sek.) nach 30 Min | Pendelhärte (Sek.) nach 24 h |
|---|---|---|---|
| Nr. 29 | 0 | 10 | 9 |
| | 2,1 | 179 | 190 |
| | 4,2 | 189 | 199 |
| | 8,4 | 193 | 203 |
| | 12,6 | 190 | 196 |
| Nr. 30 | 0 | 11 | 11 |
| | 2,1 | 183 | 190 |
| | 4,2 | 190 | 191 |
| | 8,4 | 193 | 195 |
| | 12,6 | 192 | 192 |
| Nr. 31 | 0 | 8 | 7 |
| | 2,1 | 169 | 174 |
| | 4,2 | 183 | 195 |
| | 8,4 | 189 | 197 |
| | 12,6 | 195 | 203 |
| Nr. 32 | 0 | 13 | 14 |
| | 2,1 | 160 | 175 |
| | 4,2 | 171 | 187 |
| | 8,4 | 175 | 189 |
| | 12,6 | 170 | 192 |
| Nr. 33 | 0 | 14 | 14 |
| | 2,1 | 175 | 192 |
| | 4,2 | 182 | 197 |
| | 8,4 | 185 | 196 |
| | 12,6 | 187 | 196 |
| Nr. 34 | 0 | 10 | 13 |
| | 2,1 | 172 | 199 |
| | 4,2 | 176 | 207 |
| | 8,4 | 182 | 200 |
| | 12,6 | 186 | 197 |
| Nr. 35 | 0 | 15 | 18 |
| | 2,1 | 130 | 147 |
| | 4,2 | 170 | 189 |
| | 8,4 | 182 | 202 |
| | 12,6 | 189 | 201 |
| Nr. 36 | 0 | 14 | 18 |
| | 2,1 | 156 | 177 |
| | 4,2 | 171 | 189 |
| | 8,4 | 178 | 187 |
| | 12,6 | 183 | 189 |
| Nr. 37 | 0 | 9 | 10 |
| | 2,1 | 155 | 168 |
| | 4,2 | 176 | 186 |
| | 8,4 | 185 | 196 |
| | 12,6 | 188 | 203 |

Tabelle 2 (Fortsetzung)

| Katalysator (jeweils 1%) | Bestrahlungs-zeit (Sek.) | Pendelhärte (Sek.) nach 30 Min | nach 24 h |
|---|---|---|---|
| Nr. 38 | 0 | 10 | 10 |
| | 2,1 | 135 | 143 |
| | 4,2 | 169 | 182 |
| | 8,4 | 179 | 192 |
| | 12,6 | 183 | 196 |
| Nr. 39 | 0 | 13 | 14 |
| | 2,1 | 59 | 60 |
| | 4,2 | 130 | 130 |
| | 8,4 | 173 | 187 |
| | 12,6 | 188 | 201 |
| Nr. 40 | 0 | 33 | 35 |
| | 2,1 | 132 | 146 |
| | 4,2 | 166 | 180 |
| | 8,4 | 178 | 192 |
| | 12,6 | 185 | 191 |
| Nr. 41 | 0 | 18 | 20 |
| | 2,1 | 179 | 189 |
| | 4,2 | 188 | 197 |
| | 8,4 | 192 | 199 |
| | 12,6 | 193 | 203 |

**Patentansprüche**

1. Verfahren zum Härten von Einbrennlacken, die ein säurehärtbares Harz und als Härtungskatalysator eine blockierte Sulfonsäure der Formel 1 enthalten

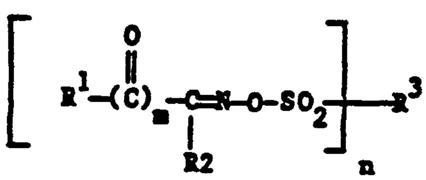

(I),

worin m = o oder 1 und n = 1 oder 2 ist,

$R^1$ $C_1$-$C_{12}$-Alkyl, $C_1$-$C_4$-Halogenalkyl, $C_2$-$C_6$-Alkenyl, $C_5$-$C_{12}$-Cyclo-alkyl, unsubstituiertes oder durch einen oder mehrere der Substituenten Halogen, $C_1$-$C_{18}$-Alkyl, $C_1$-$C_4$-Alkoxy, Phenoxy, Phenyl oder Nitro substituiertes $C_6$ -$C_{10}$-Aryl, Furyl, Thienyl, $C_7$-$C_{12}$-Aralkyl, $C_1$-$C_8$-Alkoxy, $C_5$-$C_8$-Cycloalkoxy, Phenoxy oder $H_2N$-CO-NH- bedeutet,

$R^2$ eine der für $R^1$ gegebenen Bedeutungen hat oder -CN, $C_2$-$C_5$-Alkanoyl, Benzoyl, $C_2$-$C_5$-Alkoxycarbonyl, Phenoxycarbonyl, -N($R^4$)($R^5$), Morpholino oder Piperidino bedeutet oder $R^1$ und $R^2$ zusammen mit den Atomen, an die sie gebunden sind, einen 5-8-gliedrigen Ring bilden, der durch 1 oder 2 Benzoreste anneliert sein kann, wobei $R^4$ Wasserstoff, $C_1$-$C_{12}$- Alkyl, Phenyl, $C_2$-$C_9$-Alkanoyl oder Benzoyl und R Wasserstoff, $C_1$-$C_{12}$-Alkyl oder Cyclohexyl bedeuten

$R^3$, wenn n = 1 ist, $C_1$-$C_{18}$-Alkyl, unsubstituiertes oder durch einen oder mehrere der Substituenten Halogen, $C_1$-$C_4$-Halogenalkyl, $C_1$-$C_{16}$-Alkyl, $C_1$-$C_4$-Alkoxy, $C_1$-$C_4$-Alkyl-CONH-, Phenyl-CONH-, Benzoyl oder Nitro substituiertes $C_6$-$C_{10}$-Aryl, $C_5$-$C_{12}$-Cycloalkyl, $C_7$-$C_9$-Aralkyl, Campheryl, -$CF_3$, -$CCl_3$ oder -$NH_2$ bedeutet, und wenn n = 2 ist, $C_2$-$C_{12}$- Alkylen, unsubstituiertes oder durch $C_1$-$C_{12}$-Alkyl substituiertes Phenylen, Naphthylen, Diphenylen oder Oxydiphenylen bedeutet,

dadurch gekennzeichnet, dass man den Lack mit kurzwelligem Licht bestrahlt, wodurch die freie Sulfonsäure gebildet wird, und man anschliessend den Lack bei erhöhter Temperatur aushärtet.

2. Verfahren gemäss Anspruch 1, dadurch gekennzeichnet, dass der Lack einen Härtungskatalysator der Formel 1 enthält, worin m = 0 oder 1 ist, n = 1 ist,

$R^1$ $C_1$-$C_{12}$-Alkyl, $C_1$-$C_4$-Halogenalkyl, $C_5$-$C_{12}$-Cycloalkyl, unsubstituiertes oder durch 1 oder 2 der Substituenten Cl, $C_1$-$C_{16}$-Alkyl, $C_1$-$C_4$-Alkoxy, Phenoxy oder Nitro substituiertes $C_6$-$C_{10}$-Aryl, 2-Furyl, 2-Thienyl, $C_1$-$C_4$-Alkoxy, Cyclohexyloxy oder Phenoxy bedeutet,

$R^2$ eine der für $R^1$ angegebenen Bedeutungen hat oder -CN, $C_2$-$C_5$-Alkanoyl, Benzoyl, $C_2$-$C_5$-Alkoxycarbonyl, -N($R^4$)($H^5$) oder Morpholino bedeutet, oder $R^1$ und $R^2$ zusammen mit den Atomen, an die sie gebunden sind, einen 5-8-gliedrigen Ring bilden, der durch 1 oder 2 Benzoreste anneliert sein kann, wobei $R^4$ Wasserstoff, $C_1$-$C_4$-Alkyl Phenyl, $C_2$-$C_5$-Alkanoyl, Benzoyl und $R^5$ Wasserstoff oder $C_1$-$C_4$-Alkyl bedeuten, und

$R^3$ $C_1$-$C_{18}$-Alkyl unsubstituiertes oder durch ein oder mehrere der Substituenten Halogen, $C_1$-$C_4$-Halogenalkyl, $C_1$-$C_{16}$-Alkyl, $C_1$-$C_4$-Alkoxy oder Nitro substituiertes $C_6$-$C_{10}$-Aryl, $C_5$-$C_{12}$-Cycloalkyl, Campheryl, -$CF_3$ oder -$CCl_3$ bedeutet.

3. Verfahren gemäss Anspruch 1, dadurch gekennzeichnet, dass der Lack einen Härtungskatalysator der Formel I, worin m = 0 oder 1 ist, n = 1 ist,

$R^1$ $C_1$-$C_4$-Alkyl, Trifluormethyl, unsubstituiertes oder durch 1 oder 2 der Substituenten Cl, $C_1$-$C_4$-Alkyl, $C_1$-$C_4$-Alkoxy oder Nitro substituiertes Phenyl, 2-Furyl, 2-Thienyl oder $C_1$-$C_4$-Alkoxy bedeutet,

$R^2$ eine der für $R^1$ gegebenen Bedeutungen hat oder -CN, Dialkylamino oder Morpholino ist, oder $R^1$ und $R^2$ zusammen mit den Atomen, an die sie gebunden sind, einen 5- oder 6-gliedrigen Ring bilden, der durch 1 oder 2 Benzoreste anneliert sein kann, und

$R^3$ $C_1$-$C_4$-Alkyl, unsubstituiertes oder durch einen oder zwei der Substituenten Cl, $CF_3$, $C_1$-$C_{16}$-Alkyl oder $NO_2$ substituiertes Phenyl bedeutet,

4. Verfahren gemäss Anspruch I, dadurch gekennzeichnet, dass der Lack einen Härtungskatalysator der Formel 1 enthält, worin m = 0 oder 1 ist, n = 1 ist,

$R^1$ $C_1$-$C_4$-Alkyl, Trifluormethyl, Phenyl, Mono- oder Dichlorphenyl oder Nitrophenyl ist, R eine der für $R^1$ angegebenen Bedeutungen hat oder -CN bedeutet, oder R und R zusammen mit den Atomen, an die sie gebunden sind, einen 5-6-gliedrigen Ring bilden, der durch eine oder zwei Benzogruppen anneliert ist, und R Methyl, Phenyl oder durch $C_1$-$C_{16}$-Alkyl substituiertes Phenyl bedeutet.

5. Verfahren gemäss Anspruch 1, dadurch gekennzeichnet, dass der Lack als säurehärtbares Harz ein Aminoharz enthält.

6. Verfahren gemäss Anspruch I, dadurch gekennzeichnet, dass der Lack ein Gemisch eines Melaminharzes mit einem Acryl-, Polyesteroder Alkydharz enthält.

7. Verfahren gemäss Anspruch I, dadurch gekennzeichnet, dass mannach der Bestrahlung den Lack bei einer Temperatur unterhalb von 120° C, insbesondere bei 80-100° C, aushärtet.

**Claims**

1. A process for curing baking finishes which contain an acid-curable resin and, as a curing catalyst, a blocked sulfonic acid of the formula I

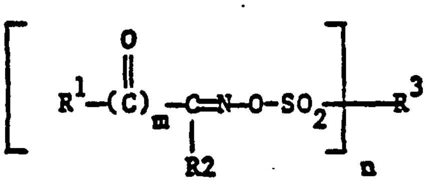

(I)

in which m is 0 or 1 and n is 1 or 2, $R^1$ is $C_1$-$C_{12}$-alkyl, $C_1$-$C_4$-haloalkyl, $C_2$-$C_6$-alkenyl, $C_5$-$C_{12}$-cycloalkyl, $C_6$-$C_{10}$-aryl which is unsubstituted or mono- or polysubstituted by halogen, $C_1$-$C_{16}$-alkyl, $C_1$-$C_4$-alkoxy, phenoxy phenyl or nitro, or is furyl, thienyl, $C_7$-$C_{12}$-aralkyl, $C_1$-$C_8$-alkoxy, $C_5$-$C_8$-cycloalkoxy, phenoxy or $H_2N$-CO-NH-, $R^2$ is as defined for $R^1$ or is -CN, $C_2$-$C_5$-alkanoyl, benzoyl, $C_2$-$C_5$-alkoxycarbonyl, phenoxycarbonyl, -N($R^4$)($R^5$), morpholino or piperidino, or $R^1$ and $R^2$, together with the atoms to which they are linked, form a 5-membered to 8-membered ring to which 1 or 2 benzo radicals can be fused, $R^4$ being hydrogen, $C_1$-$C_{12}$-alkyl, phenyl, $C_2$-$C_9$-alkanoyl or benzoyl and $R^5$ being hydrogen, $C_1$-$C_{12}$-alkyl or cyclohexyl, and $R^3$, when n is 1, is $C_1$-$C_{18}$-alkyl $C_6$-$C_{10}$-aryl which is unsubstituted or mono- or polysubstituted by halogen, $C_1$-$C_4$-halo-alkyl, $C_1$-$C_{16}$-alkyl, $C_1$-$C_4$-alkoxy, $C_1$-$C_4$-alkyl-CONH-, phenyl-CONH-, benzoyl or nitro, or is $C_5$-$C_{12}$-cycloalkyl, $C_7$-$C_9$-aral-kyl, camphoryl, -$CF_3$ -$CCl_3$ or -$MH_2$ and when n is 2, $R^3$ is $C_2$-$C_{12}$-alkylene, or unsubstituted or $C_1$-$C_{12}$-alkyl-substituted phenylene, naphthylene, diphenylene or oxydiphenylene, which process comprises irradiating the finish with short-wave light, whereby the free sulfonic acid is formed, and then fully curing it at an elevated temperature.

2. A process according to claim 1, wherein the finish contains a curing catalyst of the formula I, in which m is

0 or 1, n is 1, $R^1$ is $C_1$-$C_{12}$-alkyl $C_1$-$C_4$-haloalkyl, $C_5$-$C_{12}$-cycloalkyl $C_6$-$C_{10}$-aryl which is unsubstituted or mono- or disubstituted by Cl, $C_1$-$C_{16}$-alkyl, $C_1$-$C_4$-alkoxy, phenoxy or nitro, or is 2-furyl, 2-thienyl, $C_1$-$C_4$-alkoxy, cyclohexyloxy or phenoxy, $R^2$ is as defined for $R^1$ or is -CN, $C_2$-$C_5$-alkanoyl, benzoyl $C_2$-$C_5$-alkoxycarbonyl, -N($R^4$)($R^5$) or morpholino, or $R^1$ and $R^2$, together with the atoms to which they are linked, form a 5-membered to 8-membered ring to which 1 or 2 benzo radicals can be fused, $R^4$ being hydrogen, $C_1$-$C_4$-alkyl phenyl, $C_2$-$C_5$-alkanoyl or benzoyl and $R^5$ being hydrogen or $C_1$-$C_4$-alkyl, and $R^3$ is $C_1$-$C_{18}$-alkyl, $C_6$-$C_{10}$-aryl which is unsubstituted or mono- or polysubstituted by halogen, $C_1$-$C_4$-haloalkyl, $C_1$-$C_{16}$-alkyl, $C_1$-$C_4$-alkoxy or nitro, or is $C_5$-$C_{12}$-cycloalkyl, camphoryl, $-CF_3$ or $-CCl_3$.

3. A process according to claim 1, wherein the finish contains a curing catalyst of the formula I, in which m is 0 or 1, n is 1, $R^1$ is $C_1$-$C_4$-alkyl, trifluoromethyl, phenyl which is unsubstituted or mono- or disubstituted by Cl, $C_1$-$C_4$-alkyl, $C_1$-$C_4$-alkoxy or nitro, or is 2-furyl, 2-thienyl or $C_1$-$C_4$-alkoxy, $R^2$ is as defined for $R^1$ or is -CN, dialkylamino or morpholino, or $R^1$ and $R^2$, together with the atoms to which they are linked, form a 5-membered or 6-membered ring to which 1 or 2 benzo radicals can be fused, and $R^3$ is $C_1$-$C_4$-alkyl, or phenyl which is unsubstituted or monoor disubstituted by Cl, $CF_3$, $C_1$-$C_{16}$-alkyl or $NO_2$.

4. A process according to claim 1, wherein the finish contains a curing catalyst of the formula I, in which m is 0 or 1, n is 1, $R^1$ is $C_1$-$C_4$-alkyl, trifluoromethyl, phenyl, mono- or dichlorophenyl or nitrophenyl, $R^2$ is as defined for $R^1$ or is -CN, or $R^1$ and $R^2$, together with the atoms to which they are linked, form a 5-membered or 6-membered ring to which one or two benzo radicals are fused, and $R^3$ is methyl, phenyl or $C_1$-$C_{16}$-alkyl-substituted phenyl.

5. A process according to claim 1, wherein the finish contains an amino resin as the acid-curable resin.

6. A process according to claim 1, wherein the finish contains a mixture of a melamine resin with an acrylic, polyester or alkyd resin.

7. A process according to claim 1, wherein, after the irradiation, the finish is fully cured at a temperature below 120°C, in particular at 80-100°C.

**Revendications**

1. Procédé pour durcir des peintures-émails et vernis-émails qui contiennent une résine durcissable par des acides et, comme catalyseur de durcissement, un acide sulfonique bloqué répondant à la formule I:

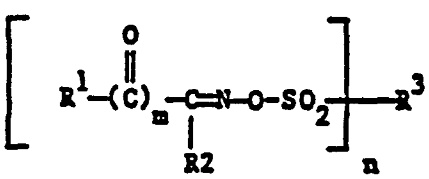

(I)

dans laquelle

m est égal à 0 ou à 1,

n est égal à 1 ou à 2,

$R^1$ représente un alkyle en $C_1$-$C_{12}$, un halogeénoalkyle en $C_1$-$C_4$, un alcényle en $C_2$-$C_8$, un cycloalkyle en $C_5$-$C_{12}$, un aryle en $C_6$-$C_{10}$ non substitué ou porteur d'un ou de plusieurs substituants pris dans l'ensemble constitué par les halogènes, les alkyles en $C_1$-$C_{16}$, les alcoxy en $C_1$-$C_4$, le phénoxy, le phényle et le nitro, un furyle, un thiényle, un aralkyle en $C_7$-$C_{12}$, un alcoxy en $C_1$-$C_8$, un cycloalcoxy en $C_5$-$C_8$, un phénoxy ou un radical $H_2N$-CO-NH-,

$R^2$ a l'une des significations qui ont été données pour $R^1$ ou représente un radical -CN, un alcanoyle en $C_2$-$C_5$, un benzoyle, un alcoxycarbonyle en $C_2$-$C_5$, un phénoxycarbonyle, un radical -N($R^4$)($R^5$) (dans lequel $R^4$ représente l'hydrogène, un alkyle en $C_1$ - $C_{12}$, un phényle, un alcanoyle en $C_2$-$C_9$ ou un benzoyle et $R^5$ l'hydrogène, un alkyle en $C_1$-$C_{12}$ ou un cyclohexyle), un morpholino ou un pipéridino,

$R^1$ et $R^2$ pouvant également former ensemble et avec les atomes auxquels ils sont liés un cycle contenant de 5 à 8 maillons et éventuellement condensé à 1 ou à 2 noyaux benzo,

$R^3$ représente, dans le cas où n est égal à 1, un alkyle en $C_1$-$C_{18}$, un aryle en $C_6$-$C_{10}$ non substitué ou porteur d'un ou de plusieurs substituants pris dans l'ensemble constitué par les halogènes, les halogénoalkyles en $C_1$-$C_4$, les alkyles en $C_1$-$C_{16}$, les alcoxy en $C_1$-$C_4$, les radicaux alkyl-CONH- à alkyle en $C_1$-$C_4$ ainsi que par les radicaux phényl-CONH-, benzoyle et nitro ou un radical cycloalkyle en $C_5$-$C_{12}$, aralkyle en $C_7$-$C_9$ camphéryle $-CF_3$ $-CCl_3$ ou $-NH_2$, et représente, lorsque n est égal à 2, un alkylène en $C_2$-$C_{12}$, un phénylène non substitué ou porteur d'un alkyle en $C_1$-$C_{12}$, un naphthylène, un biphénylylène ou un oxy-diphénylène,

procédé caractérisé en ce qu'on irradie la peinture par un rayonnement de courte longueur d'onde, ce qui a pour effet de libérer l'acide sulfonique, puis on durcit la peinture à température élevée:

2. Procédé selon la revendication 1 caractérisé en ce que la peinture ou le vernis contient un catalyseur de durcissement de formule I dans lequel:

m est égal à 0 ou à 1,

n est égal à 1,

$R^1$ représente un alkyle en $C_1$-$C_{12}$, un halogénoalkyle en $C_1$-$C_4$, un cycloalkyle en $C_5$-$C_{12}$, un aryle en $C_6$-$C_{10}$ non substitué ou porteur d'1 ou 2 substituants pris dans l'ensemble constitué par Cl, les alkyles en $C_1$-$C_{16}$, les alcoxy en $C_1$-$C_4$, le phénoxy et le nitro, un furyle-2, un thiényle-2, un alcoxy en $C_1$-$C_4$, un cyclohexyloxy ou un phénoxy,

$R^2$ a l'une des significations qui viennent d'être données pour $R^1$ ou représente -CN, un alcanoyle en $C_2$-$C_5$, un benzoyle, un alcoxycarbonyle en $C_2$-$C_5$, un radical -N($R^4$) ($R^5$) (dans lequel $R^4$ représente l'hydrogène, un alkyle en $C_1$-$C_4$, un phényle, un alcoxycarbonyle en $C_2$-$C_5$ ou un benzoyle et $R^5$ l'hydrogène ou un alkyle en $C_1$-$C_4$) ou un radical morpholino,

$R^1$ et $R^2$ pouvant également former ensemble, et avec les atomes qui les porte, un cycle qui contient de 5 à 8 maillons et qui peut être condensé à 1 ou à 2 noyaux benzo,

et

$R^3$ représente un alkyle en $C_1$-$C_{18}$, un aryle en $C_6$-$C_{10}$ non substitué ou porteur d'un ou de plusieurs substituants pris dans l'ensemble constitué par les halogénes, les halogènoalkyles en $C_1$-$C_4$, les alkyles en $C_1$-$C_{16}$, les alcoxy en $C_1$-$C_4$ et le nitro, un cycloalkyle en $C_5$-$C_{12}$, un camphéryle $-CF_3$ ou $-CCl_3$.

3. Procédé selon la revendication 1 caractérisé en ce que la peinture ou le vernis contient un catalyseur de durcissement de formule I dans lequel

m est égal à 0 ou à 1,

n est égal à 1,

$R^1$ représente un alkyle en $C_1$-$C_4$, un trifluorométhyle, un phényle non substitué ou porteur d'I ou de 2 substituants pris dsns l'ensemble constitué par Cl, les slkyles en $C_1$-$C_4$, les alcoxy en $C_1$-$C_4$ et le nitro, un furyle-2, un thiényle-2 ou un alcoxy en $C_1$-$C_4$,

$R^2$ a l'une des significations qui viennent d'être données pour $R^1$ ou représente un radical cyano, dialkylamino ou morpholino,

$R^1$ et $R^2$ pouvant également former ensemble, et avec les atomes auxquels ils sont liés, un cycle qui contient 5 ou 6 maillons et qui peut être condensé à 1 ou à 2 noyaux benzo, et

$R^3$ représente un alkyle en $C_1$-$C_4$, ou un phényle non substitué ou porteur d' 1 ou de 2 substituants pris dans l'ensemble constitué par Cl, $-CF_3$, les alkyles en $C_1$-$C_{16}$ et $-NO_2$:

4. Procédé selon la revendication 1, caractérisé en ce que la peinture ou le vernis contient un catalyseur de durcissement de formule I dans lequel:

m est égal à 0 ou à 1,

n est égal à 1,

$R^1$ représente un alkyle en $C_1$-$C_4$, un trifluorométhyle, un phényle, un monochlorophényle, un dichlorophényle ou un nitrophényle,

$R^2$ a l'une des significations qui viennent d'être données pour $R^1$ ou représente un radical cyano,

$R^1$ et $R^2$ pouvant également former ensemble, et avec les atomes auxquels ils sont liés, un cycle qui contient 5 ou 6 maillons et qui est condensé à 1 ou à 2 noyaux benzo,

et

$R^3$ représente un méthyle, un phényle ou un phényle porteur d'un alkyle en $C_1$-$C_{16}$.

5. Procédé selon la revendication 1 caractérisé en ce que la peinture ou le vernis contient une résine aminée comme résine durcissable par un acide:

6. Procédé selon la revendication 1 caractérisé en ce que la peinture ou le vernis contient un mélange d'une résine de mélamine et d'une résine acrylique, polyester ou alkyde.

7. Procédé selon la revendication 1 caractérisé en ce que, après l'irradiation, on durcit la peinture ou le vernis à une température inférieure à 120° C, plus particuliérement à une température comprise entre 80 et 100° C: